# EUROPEAN PATENT SPECIFICATION

(11) **EP 2 495 934 B1**
(45) Date of publication and mention of the grant of the patent: **27.09.2017**
(21) Application number: 11156305.2
(22) Date of filing: 28.02.2011
(51) Int. Cl.: H04L 29/08

(54) **Wireless communications system providing media content transfer features and related methods**
Drahtloses Kommunikationssystem zur Bereitstellung von Medieninhaltübertragungsfunktionen und zugehörige Verfahren
Système de communications sans fil fournissant des fonctions de transfert de contenu média et procédés apparentés

(43) Date of publication of application: 05.09.2012
(73) Proprietor: BlackBerry Limited, Waterloo, ON N2K 0A7 (CA)
(72) Inventor: Rose, Scott Douglas, Waterloo Ontario N2L 3W8 (CA); Moosavi, Vahid, Waterloo Ontario N2L 3W8 (CA); Verma, Sushil K., Richmond Hill Ontario L4B 4H9 (CA)
(74) Representative: Fennell, Gareth Charles

(56) References cited:
- JP-A- 2008 145 972
- US-A1- 2010 054 707

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

US 2010/0054707 discloses a method and system for advertisement insertion and playback for STB with PVR functionality.

### Brief Description of the Drawings

FIG. 1 is a schematic block diagram of a wireless communications system in accordance with an example embodiment.
FIG. 2 is a schematic block diagram of an alternative embodiment of the wireless communications system of FIG. 1.
FIGS. 3 and 4 are schematic block diagrams of a wireless communications system in accordance with an example embodiment shown before and after transfer of a playback pointer, respectively.
FIG. 5 is a flow diagram illustrating method aspects associated with the systems of FIGS. 1 through 4.
FIG. 6 is a schematic block diagram illustrating example components of a mobile wireless communications device that may be used with the systems of FIGS. 1 through 4.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a wireless communications system is disclosed herein which may include a first electronic device comprising a first media content playback device, a first wireless transceiver, and a first controller coupled with the first media content playback device and the first wireless transceiver. The system may further include a second electronic device comprising a second media content playback device, a second wireless transceiver configured to wirelessly communicate with the first wireless transceiver, and a second controller coupled with the second media content playback device and the second wireless transceiver. The first controller may be configured to generate a playback pointer associated with playback of given media content, and wirelessly communicate the playback pointer to the second controller. The second controller may be configured to play back the given media content based upon the playback pointer and without receiving the given media content from the first electronic device. Accordingly, this may advantageously conserve power or processing resources of the first electronic device by having the second electronic device continue playback of the given media content without streaming the content between the devices, for example.

More particularly, the first and second wireless transceivers may be configured to communicate with one another when in proximity with one another. By way of example, the first and second wireless transceivers may comprise near field communication (NFC) transceivers. Additionally, the playback pointer may comprise a media content identifier. In an example implementation, the second controller may be configured to obtain media content via a communications network and based upon a network address, and the playback pointer may further comprise a network address for the given media content.

The first controller may be further configured to discontinue playback of the given media content upon wirelessly communicating the playback pointer to the second controller, for example. By way of example, the first electronic device may comprise a mobile wireless communications device, and the second electronic device may comprise a media content server. In addition, the first and second controllers may be further configured to synchronize media content therebetween. By way of example, the given media content may comprise at least one of audio content or video content.

A related electronic device may include a media content playback device, a wireless transceiver configured to wirelessly communicate with a wireless communications device, and a controller coupled with the media content playback device and the wireless transceiver. The controller may be configured to receive a playback pointer from the wireless communications device via the wireless transceiver, where the playback pointer may be associated with playback of given media content by the wireless communications device. The controller may also be configured to play back the given media content with the media content playback device based upon the playback pointer, and without receiving the given media content from the wireless communications device.

A related wireless communications method may include generating a playback pointer at a first electronic device associated with playback of given media content with a first media content playback device of the first electronic device, and wirelessly communicating the playback pointer from the first electronic device to a second electronic device. The method may further include playing back the given media content with a second media content playback device of the second electronic device based upon the playback pointer and without receiving the given media content from the first electronic device.

A related computer-readable medium is also provided. The computer-readable medium may have computer-executable instructions for causing an electronic device comprising a media content playback device and a wireless transceiver to perform steps comprising receiving a playback pointer from a wireless communications device via the wireless transceiver, where the playback pointer may be associated with playback of given media content by the wireless communications device, and playing back the given media content via the media content playback device based upon the playback pointer, and without receiving the given media content from the wireless communications device.

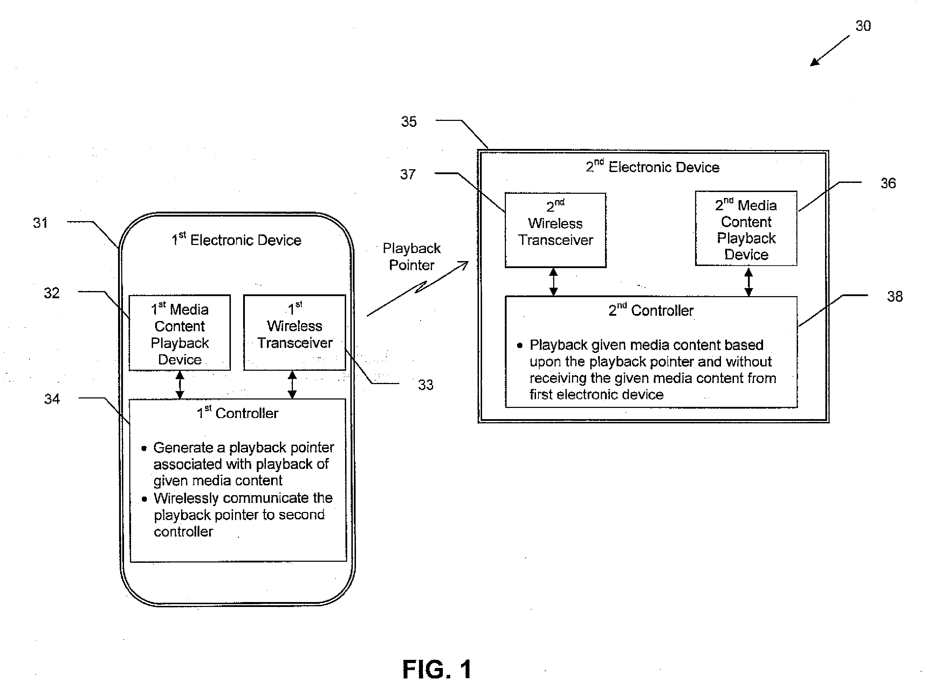

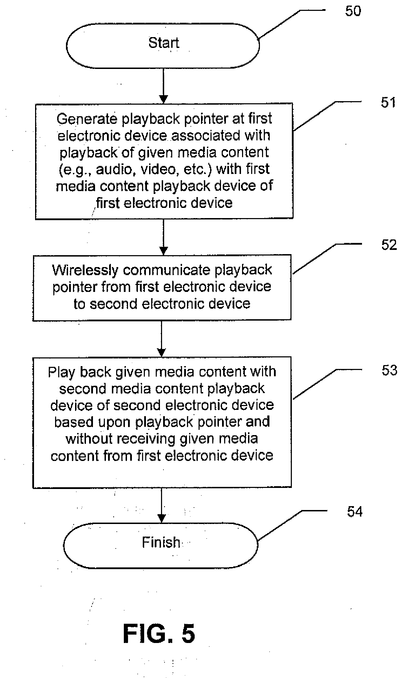

Referring initially to FIGS. 1 and 5, a wireless communications system **30** and related method aspects are first described. The system **30** illustratively includes a first electronic device **31** comprising a first media content playback device **32,** a first wireless transceiver **33,** and a first controller **34** coupled to the first media content playback device **32** and the first wireless transceiver **33.** The system **30** further illustratively includes a second electronic device **35** comprising a second media content playback device **36,** a second wireless transceiver **37** configured to wirelessly communicate with the first wireless transceiver **33,** and a second controller **38** coupled to the second media content playback device **36** and the second wireless transceiver **37.** The first controller **34** and the second controller **38** may be implemented using a combination of hardware (e.g., processor, memory, etc.) and software (e.g., a computer-readable medium having computer-executable instructions), for example.

Beginning at Block **50,** the first controller **34** may be configured to generate a playback pointer associated with playback of given media content by the first media content playback device **32,** at Block **51,** as will be discussed further below. By way of example, the media content may comprise audio, video, text, etc., and the first and second media content playback devices **32, 36** may comprise audio playback devices (e.g., speakers, audio amplifiers, etc.), or video or image playback devices (e.g., displays, video amplifiers, etc.). In some example embodiments, a combination of media playback devices may be used, such as for multimedia content playback. Example types of media content may include music, video, animation, electronic books, podcasts, etc.

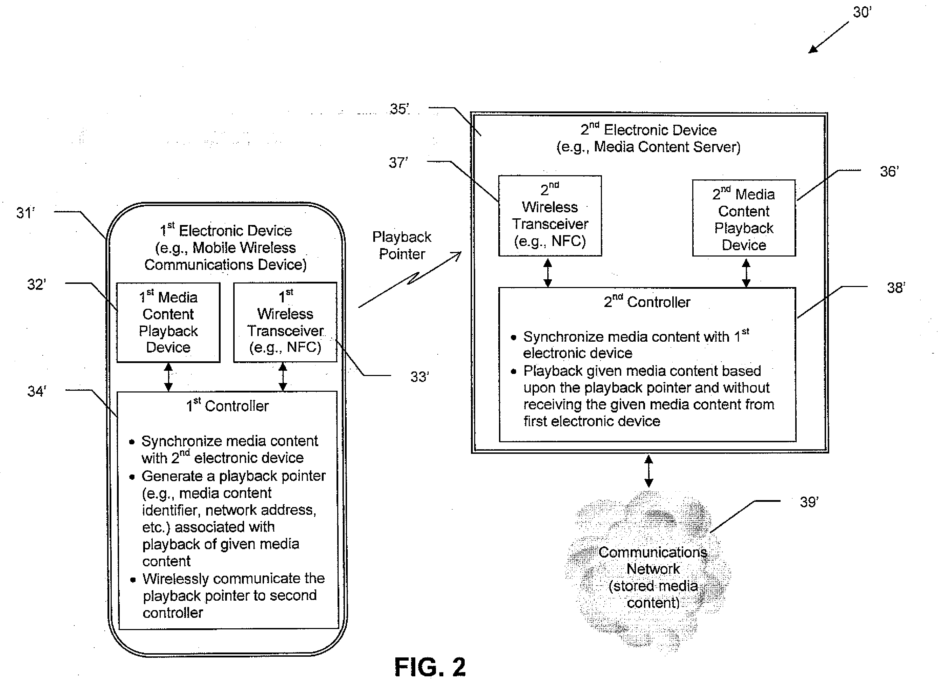

The first controller **34** is further configured to wirelessly communicate the playback pointer to the second controller **38,** at Block **52,** via the first and second wireless transceivers **33, 37.** In the example embodiment of FIG. 2, the first and second wireless transceivers **33', 37'** are configured to communicate when in proximity to one another. For example, the first and second wireless transceivers **33', 37'** may comprise near field communication (NFC) transceivers.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

In this regard, NFC may be particularly advantageous for communicating a playback pointer between the first and second devices **31, 32,** as the relatively close proximity used for such communications helps avoid conflicts or unwanted communication with others electronic devices. Moreover, because of the relatively close communication range, using NFC generally involves a gesture akin to physically pointing at the intended electronic device to which media content playback is to be transferred, which may be helpful in selecting a desired electronic device. However, it will be appreciated that other wireless communication formats may also be used in some embodiments for communicating or transferring the playback pointer, such as Bluetooth, wireless local area network (WLAN) or WiFi, etc.

The second controller **38** may advantageously be configured to play back the given media content based upon the playback pointer from the first electronic device **31,** yet without receiving the given media content from the first electronic device, at Block **53,** which illustratively concludes the method shown in FIG. 5 (Block **54**). Accordingly, this may conserve power (e.g., battery) and processing resources of the first electronic device **31** by having the second electronic device **35** continue independent playback of the given media content.

By way of contrast, in some systems music or video playback may be switched from a first device (e.g., a mobile phone or MP3 player) to a second device, such as a stereo or television, by wirelessly streaming the media playback from the first device to the second device using Bluetooth. That is, the first device continues to "play" the media and streams it to the second device, essentially acting as master device that commandeers the media output device of a slave device. However, one potential problem with such systems is that if the first device is moved around, the Bluetooth connection to the second device may become noisy or even get dropped. Moreover, this may impose significant power requirements on the first device, resulting in an increased battery drain, as well as increased usage of processing resources. These technical problems may advantageously be overcome by the systems **30, 30',** as noted above.

Generally speaking, the playback pointer may include one or more pieces of information that allow the second controller **38** to play back the given media content without having to receive that content from the first electronic device **31.** For example, the playback pointer may comprise a media content identifier, such as an identification number, title, etc., which allows the second controller **38** to identify the given media content from a library, catalog, or database of available media content. Turning again to the example implementation of FIG. 2, the second electronic device **35'** may comprise a media content server, such as a media server application running on a personal computer (PC), Mac, etc.

It should be noted that playback may be of a single content item (e.g., a single song), or the given media content may comprise a plurality of content items (e.g., a plurality of songs in a playlist, a plurality of images in a slideshow or album, etc.). In some example embodiments, the first and second controllers **34', 38'** may be further configured to synchronize media content therebetween (e.g., the second electronic device **35'** may store a media content library, and the first electronic device **31'** may be periodically synchronized to store at least some of the media content from the library).

Furthermore, in some example embodiments the second processor **38'** may also be configured to obtain media content via a communications network **39'** based upon a network address. As such, the playback pointer may comprise a network address for accessing the given media content via the communications network **39'.** For example, the given media content may comprise an Internet radio stream, and the playback pointer may include an indicator of the network address where the radio stream may be accessed for continued playback by the second media content playback device **36'.** Other examples may include television broadcasts (e.g., mobile TV), streaming videos (e.g., YouTube videos), streaming text (e.g., stock ticker, news feed), playlists, audio books, etc.

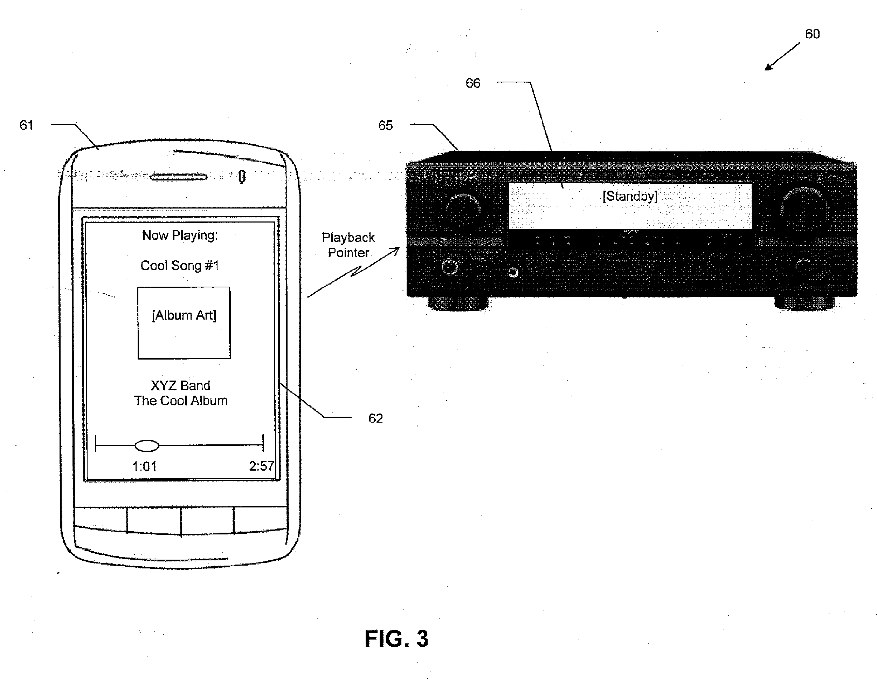

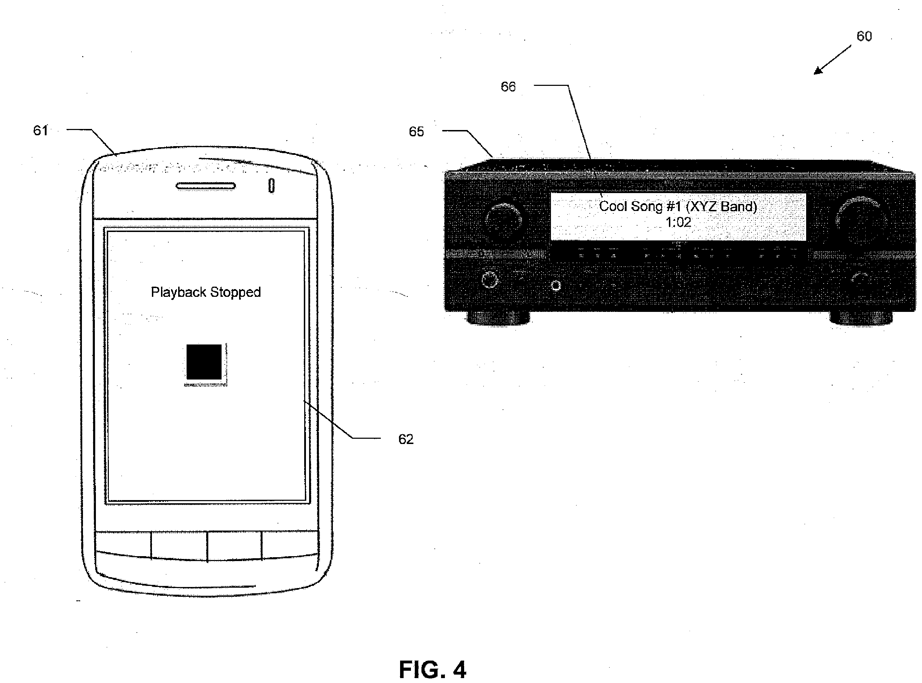

As noted above, a significant advantage of the above-described systems **30, 30'** is that the first controller **34, 34'** may advantageously be configured to discontinue playback of the given media content upon wirelessly communicating the playback pointer to the second controller, which advantageously helps conserve battery or processing resources of the first electronic device **31,** for example. This sequence of events will be further understood with reference to another example communications system **60** shown in FIGS. 3 and 4. Here, the first electronic device comprises a mobile wireless communications device **61** (also referred to as a "mobile device" herein), and the second electronic device comprises an audio output device, which in the present example is a stereo receiver **65** (although other suitable audio output devices may also be used). The mobile device **61** further comprises a display **62,** and the stereo receiver **65** similarly comprises a display **66.** The stereo receiver **65** may include a memory for storing media content, may be coupled to a computer (such as in a home network) or other device which stores the media content, or it may access the media content via a network (e.g., Internet audio or video stream), as described above.

As seen in FIG. 3, the mobile devices **61** is playing a song (Cool Song #1 by the XYZ Band from the Cool Album) using a media application. At this moment, the song is 1:01 into playback, the stereo receiver **65** is in a standby mode, and wireless communication between the mobile device **61** and the stereo receiver **65** is initiated to communicate the playback pointer to the stereo receiver **65** and thereby "hand off" playback of the song from the mobile device to the stereo receiver **65.** In the case of NFC, for example, wireless communication between the mobile device **61** and the stereo receiver **65** may be initiated by swiping or bumping the mobile device with the NFC-enabled stereo receiver.

Upon receipt of the playback pointer, the stereo receiver **65** accesses the given media content (i.e., "Cool Song #1") from a media content database, network, etc., and begins playback, and picking up from the point where the mobile device **61** was in playback. That is, the stereo receiver **65** advantageously begins playback at 1:02 into the song, as shown on the display **66.** Depending on the given implementation, playback does not have to continue at the same point in time. For example, in one embodiment, a buffer may be added in to begin playback on the stereo receiver **65** several seconds before or after the last point of playback on the mobile device **61.** Alternatively, in one embodiment, the given media content may be re-started from the beginning, or playback may commence on a subsequent track, chapter, etc., in some embodiments, for example. Another parameter that may be passed between the mobile device 61 and the stereo receiver **65** is a startup delay. In this way, the mobile device **61** may advantageously continue to play the song, etc., for x number of seconds while the stereo receiver **65** has time to power up (if necessary), retrieve the media file, and begin playback. This may advantageously help ensure that the mobile device **61** stops playback at substantially the same instance that the stereo receiver **65** begins playback.

Furthermore, as seen on the display **65** of the mobile device **61,** upon communicating the playback pointer to the stereo receiver **65,** the mobile device discontinues or stops playback of the song. In some example embodiments, the mobile device **61** may advantageously be configured to then operate as a remote control for the stereo receiver **65,** to provide further convenience in managing playback by the stereo receiver **65.**

In addition to the electronic devices described above, various other types of electronic devices may also be used. By way of example, such devices may include portable or personal media players (e.g., music or MP3 players, video players, etc.), portable gaming devices, portable or mobile telephones, smartphones, tablet computers, electronic readers ("e-readers"), car audio or video devices, etc.

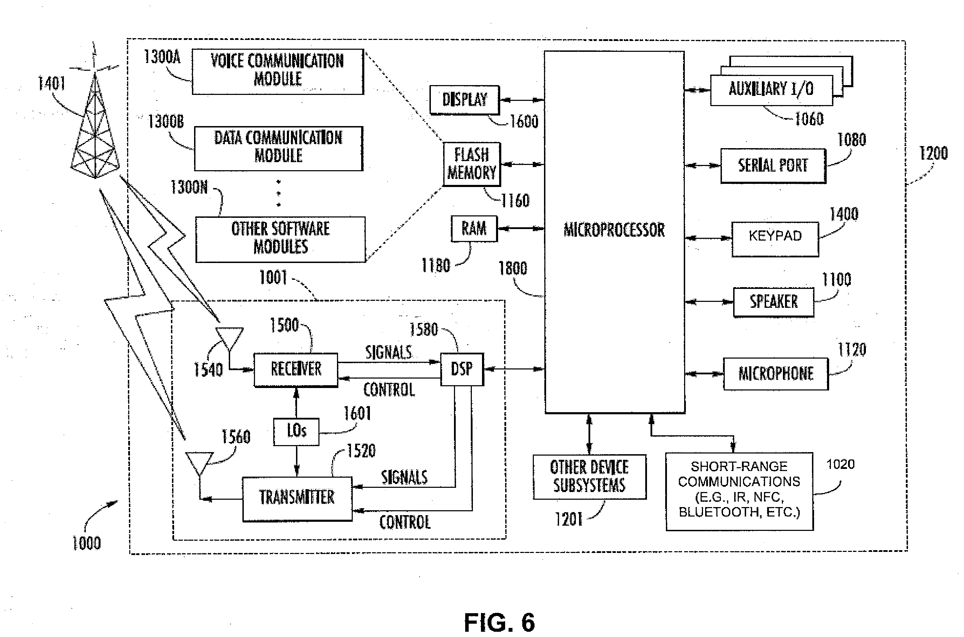

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A wireless communications system (30) comprising:
a first electronic device (31) comprising
a first media content playback device (32),
a first wireless transceiver (33), and
a first controller (34) coupled with said first media content playback device and said first wireless transceiver; and
a second electronic device (35) comprising
a second media content playback device (36),
a second wireless transceiver (37) configured to wirelessly communicate with said first wireless transceiver, and
a second controller (38) coupled with said second media content playback device and said second wireless transceiver;
said first controller being configured to generate a playback pointer associated with playback of given media content, and wirelessly communicate the playback pointer to said second controller;
said second controller being configured to play back the given media content based upon the playback pointer from a media content server comprised in the second media content playback device.

2. The wireless communications system (30) of Claim 1 wherein said first and second wireless transceivers (33, 37) are configured to communicate with one another when in proximity with one another.

3. The wireless communications system (30) of Claim 2 wherein said first and second wireless transceivers (33, 37) comprise near field communication (NFC) transceivers.

4. The wireless communications system (30) of Claim 1 wherein the playback pointer comprises a media content identifier.

5. The wireless communications system (30') of Claim 1 wherein said second controller (38') is configured to obtain media content via a communications network (39') and based upon a network address; and wherein the playback pointer further comprises a network address for the given media content.

6. The wireless communications system (30) of Claim 1 wherein said first controller (34) is further configured to discontinue playback of the given media content upon wirelessly communicating the playback pointer to said second controller (38).

7. The wireless communications system (30) of Claim 1 wherein said first electronic device (31) comprises a mobile wireless communications device.

8. The wireless communications system (30) of Claim 1 wherein said second electronic device (35) comprises a media content server.

9. An electronic device (35) comprising:
a media content playback device (36);
a wireless transceiver (37) configured to wirelessly communicate with a wireless communications device (31); and
a controller (38) coupled with said media content playback device and wireless transceiver, said controller being configured to
receive a playback pointer from the wireless communications device via said wireless transceiver, the playback pointer being associated with playback of a given media content by the wireless communications device, and
play back the given media content with the media content playback device based upon the playback pointer from a media content server comprised in the electronic device.

10. The electronic device (35) of Claim 9 wherein said wireless transceiver (37) is configured to communicate with the wireless communications device (31) when in proximity thereto.

11. The electronic device (35) of Claim 10 wherein said wireless transceiver (37) comprises a near field communication (NFC) transceiver.

12. A wireless communications method comprising:
generating a playback pointer at a first electronic device (31) associated with playback of given media content by a first media content playback device (32) of the first electronic device;
wirelessly communicating the playback pointer from the first electronic device to a second electronic device (35); and
playing back the given media content with a second media content playback device (36) of the second electronic device based upon the playback pointer from a media content server comprised in the second electronic device.

13. The method of Claim 12 wherein wirelessly communicating comprises wirelessly communicating when the first and second electronic devices (32, 37) are in proximity to one another.

14. The method of Claim 13 wherein wirelessly communicating comprises wirelessly communicating via near field communication (NFC).

15. The method of Claim 12 wherein the playback pointer comprises a media content identifier.

## Patentansprüche

1. Drahtloses Kommunikationssystem (30), umfassend:
eine erste elektronische Vorrichtung (31), umfassend:
eine erste Wiedergabevorrichtung für Medieninhalte (32),
einen ersten drahtlosen Sende-Empfänger (33) und
ein erstes Steuergerät (34), das mit der ersten Wiedergabevorrichtung für Medieninhalte und dem ersten drahtlosen Sende-Empfänger gekoppelt ist; und
eine zweite elektronische Vorrichtung (35), umfassend
eine zweite Wiedergabevorrichtung für Medieninhalte (36),
einen zweiten drahtlosen Sende-Empfänger (37), der konfiguriert ist, drahtlos mit dem ersten Sende-Empfänger zu kommunizieren, und
ein zweites Steuergerät (38), das mit der zweiten Wiedergabevorrichtung für Medieninhalte und dem zweiten drahtlosen Sende-Empfänger gekoppelt ist;
wobei das erste Steuergerät konfiguriert ist, einen Wiedergabezeiger zu generieren, der mit einer Wiedergabe eines gegebenen Medieninhalts assoziiert ist, und drahtlos den Wiedergabezeiger an das zweite Steuergerät zu kommunizieren;
wobei das zweite Steuergerät konfiguriert ist, den gegebenen Medieninhalt auf Basis des Wiedergabezeigers von einem Medieninhaltsserver wiederzugeben, der in der zweiten Wiedergabevorrichtung für Medieninhalte umfasst ist.

2. Drahtloses Kommunikationssystem (30) nach Anspruch 1, wobei der erste und der zweite drahtlose Sende-Empfänger (33, 37) konfiguriert sind, miteinander zu kommunizieren, wenn sie sich in der Nähe zueinander befinden.

3. Drahtloses Kommunikationssystem (30) nach Anspruch 2, wobei der erste und der zweite drahtlose Sende-Empfänger (33, 37) Sende-Empfänger für Nahfeldkommunikation (NFC) umfassen.

4. Drahtloses Kommunikationssystem (30) nach Anspruch 1, wobei der Wiedergabezeiger einen Medieninhaltsidentifikator umfasst.

5. Drahtloses Kommunikationssystem (30') nach Anspruch 1, wobei das zweite Steuergerät (38') konfiguriert ist, Medieninhalte über ein Kommunikationsnetzwerk (39') und auf Basis einer Netzwerkadresse zu erhalten; und wobei der Wiedergabezeiger ferner eine Netzwerkadresse für den gegebenen Medieninhalt umfasst.

6. Drahtloses Kommunikationssystem (30) nach Anspruch 1, wobei das erste Steuergerät (34) ferner konfiguriert ist, eine Wiedergabe des gegebenen Medieninhalts nach drahtlosem Kommunizieren des Wiedergabezeigers an das zweite Steuergerät (38) abzubrechen.

7. Drahtloses Kommunikationssystem (30) nach Anspruch 1, wobei die erste elektronische Vorrichtung (31) eine mobile drahtlose Kommunikationsvorrichtung umfasst.

8. Drahtloses Kommunikationssystem (30) nach Anspruch 1, wobei die zweite elektronische Vorrichtung (35) einen Medieninhaltsserver umfasst.

9. Elektronische Vorrichtung (35), umfassend:
eine Wiedergabevorrichtung für Medieninhalte (36);
einen drahtlosen Sende-Empfänger (37), der konfiguriert ist, drahtlos mit einer drahtlosen Kommunikationsvorrichtung (31) zu kommunizieren; und
ein Steuergerät (38), das mit der Wiedergabevorrichtung für Medieninhalte und dem drahtlosen Sende-Empfänger gekoppelt ist, wobei das Steuergerät konfiguriert ist,
einen Wiedergabezeiger über den drahtlosen Sende-Empfänger von der drahtlosen Kommunikationsvorrichtung zu empfangen, wobei der Wiedergabezeiger mit einer Wiedergabe eines gegebenen Medieninhalts durch die drahtlose Kommunikationsvorrichtung assoziiert ist, und
den gegebenen Medieninhalt mit der Wiedergabevorrichtung für Medieninhalte auf Basis des Wiedergabezeigers von einem in der elektronischen Vorrichtung umfassten Medieninhaltsserver wiederzugeben.

10. Die elektronische Vorrichtung (35) nach Anspruch 9, wobei der drahtlose Sende-Empfänger (37) konfiguriert ist, mit der drahtlosen Kommunikationsvorrichtung (31) zu kommunizieren, wenn er sich in der Nähe dieser befindet.

11. Elektronische Vorrichtung (35) nach Anspruch 10, wobei der drahtlose Sende-Empfänger (37) einen Sende-Empfänger für Nahfeldkommunikation (NFC) umfasst.

12. Drahtloses Kommunikationsverfahren, umfassend:
Generieren eines Wiedergabezeigers an einer ersten elektronischen Vorrichtung (31), die mit der Wiedergabe von gegebenen Medieninhalten durch eine erste Wiedergabevorrichtung für Medieninhalte (32) der ersten elektronischen Vorrichtung assoziiert ist;
drahtloses Kommunizieren des Wiedergabezeigers von der ersten elektronischen Vorrichtung an eine zweite elektronische Vorrichtung (35); und
Wiedergeben des gegebenen Medieninhalts mit einer zweiten Wiedergabevorrichtung für Medieninhalte (36) der zweiten elektronischen Vorrichtung auf Basis des Wiedergabezeigers von einem in der zweiten elektronischen Vorrichtung umfassten Medieninhaltsserver.

13. Verfahren nach Anspruch 12, wobei das drahtlose Kommunizieren ein drahtloses Kommunizieren umfasst, wenn sich die erste und die zweite elektronische Vorrichtung (32, 37) in der Nähe zueinander befinden.

14. Verfahren nach Anspruch 13, wobei das drahtlose Kommunizieren ein drahtloses Kommunizieren über Nahfeldkommunikation (NFC) umfasst.

15. Verfahren nach Anspruch 12, wobei der Wiedergabezeiger einen Medieninhaltsidentifikator umfasst.

## Revendications

1. Système de communication sans fil (30) comprenant :
un premier dispositif électronique (31) comprenant :
un premier dispositif de lecture de contenu multimédia (32) ;
un premier émetteur-récepteur sans fil (33) ; et
un premier contrôleur (34) couplé audit premier dispositif de lecture de contenu multimédia et audit premier émetteur-récepteur sans fil ; et
un second dispositif électronique (35) comprenant :
un second dispositif de lecture de contenu multimédia (36) ;
un second émetteur-récepteur sans fil (37) configuré pour communiquer par sans fil avec ledit premier émetteur-récepteur sans fil ; et
un second contrôleur (38) couplé audit second dispositif de lecture de contenu multimédia et audit second émetteur-récepteur sans fil ;
ledit premier contrôleur étant configuré pour produire un pointeur de lecture associé à la lecture d'un contenu multimédia donné, et pour communiquer par sans fil le pointeur de lecture audit second contrôleur ;
ledit second contrôleur étant configuré pour lire le contenu multimédia donné compris dans le second dispositif de lecture de contenu multimédia.

2. Système de communication sans fil (30) selon la revendication 1, dans lequel lesdits premier et second émetteurs-récepteurs sans fil (33, 37) sont configurés pour communiquer l'un avec l'autre lorsqu'ils sont à proximité l'un de l'autre.

3. Système de communication sans fil (30) selon la revendication 2, dans lequel chacun desdits premier et second émetteurs-récepteurs sans fil (33, 37) consiste en un émetteur-récepteur de communication en champ proche (NFC).

4. Système de communication sans fil (30) selon la revendication 1, dans lequel le pointeur de lecture comprend un identificateur de contenu multimédia.

5. Système de communication sans fil (30') selon la revendication 1, dans lequel ledit second contrôleur (38') est configuré pour obtenir un contenu multimédia via un réseau de communication (39') et en fonction d'une adresse de réseau, et dans lequel le pointeur de lecture comprend en outre une adresse de réseau pour le contenu multimédia donné.

6. Système de communication sans fil (30) selon la revendication 1, dans lequel ledit premier contrôleur (34) est en outre configuré pour cesser la lecture du contenu multimédia donné après avoir communiqué le pointeur de lecture par sans fil audit second contrôleur (38).

7. Système de communication sans fil (30) selon la revendication 1, dans lequel ledit premier dispositif électronique (31) consiste en un dispositif de communication mobile sans fil.

8. Système de communication sans fil (30) selon la revendication 1, dans lequel ledit second dispositif électronique (35) consiste en un serveur de contenu multimédia.

9. Dispositif électronique (35) comprenant :
un dispositif de lecture de contenu multimédia (36) ;
un émetteur-récepteur sans fil (37) configuré pour communiquer par sans fil avec un dispositif de communication sans fil (31) ; et
un contrôleur (38) couplé audit dispositif de lecture de contenu multimédia et audit émetteur-récepteur sans fil, ledit contrôleur étant configuré pour :
recevoir un pointeur de lecture du dispositif de communication sans fil via ledit émetteur-récepteur sans fil, le pointeur de lecture étant associé à la lecture d'un contenu multimédia donné par le dispositif de communication sans fil ; et
lire le contenu multimédia donné à l'aide du dispositif de lecture de contenu multimédia en fonction du pointeur de lecture, à partir d'un serveur de contenu multimédia compris dans le dispositif électronique.

10. Dispositif électronique (35) selon la revendication 9, dans lequel ledit émetteur-récepteur sans fil (37) est configuré pour communiquer avec le dispositif de communication sans fil (31) lorsqu'ils sont à proximité l'un de l'autre.

11. Dispositif électronique (35) selon la revendication 10, dans lequel ledit émetteur-récepteur sans fil (37) consiste en un émetteur-récepteur de communication en champ proche (NFC).

12. Procédé de communication par sans fil, comprenant les étapes consistant à :
sur un premier dispositif électronique (31), produire un pointeur de lecture associé à la lecture d'un contenu multimédia donné par un premier dispositif de lecture de contenu multimédia (32) du premier dispositif électronique ;
communiquer par sans fil le pointeur de lecture entre le premier dispositif électronique et un second dispositif électronique (35) ;
lire le contenu multimédia donné à l'aide d'un second dispositif de lecture de contenu multimédia (36) du second dispositif électronique, en fonction du pointeur de lecture, à partir d'un serveur de contenu multimédia compris dans le second dispositif électronique.

13. Procédé selon la revendication 12, dans lequel l'étape de communication par sans fil comprend l'étape consistant à communiquer par sans fil lorsque le premier et le second dispositifs électroniques (32, 37) sont à proximité l'un de l'autre.

14. Procédé selon la revendication 13, dans lequel l'étape de communication par sans fil comprend l'étape consistant à communiquer par sans fil via une communication en champ proche (NFC).

15. Procédé selon la revendication 12, dans lequel le pointeur de lecture comprend un identificateur de contenu multimédia.
